# EUROPÄISCHE PATENTANMELDUNG

(11) **EP 4 517 563 A1**
(43) Veröffentlichungstag der Anmeldung: **05.03.2025**
(21) Anmeldenummer: 23194014.9
(22) Anmeldetag: 29.08.2023
(51) Int. Cl.: G06F 21/10, G06F 21/64, H04L 9/32, H04L 9/00

(54) **VERFAHREN ZUM ÜBERWACHEN DER GÜLTIGKEIT EINER LIZENZ, COMPUTERPROGRAMMPRODUKT UND COMPUTERLESBARES MEDIUM**

(71) Anmelder: Siemens Aktiengesellschaft, 80333 München (DE)
(72) Erfinder: Hinkelmann, Andreas, 91126 Schwabach (DE); Singh, Saurabh Narayan, 81739 München (DE)
(74) Vertreter: Siemens Patent Attorneys

(57) **Zusammenfassung**

Die Erfindung betrifft ein Verfahren, insbesondere computergestütztes Verfahren, zum Überwachen der Gültigkeit einer zeitlich befristeten Lizenz für ein Gerät (1), insbesondere für eine Funktionalität eines Geräts (1), bevorzugt für ein Softwareprodukt auf einem Gerät (1), eines Anwenders, wobei dem Gerät (1) eine Blockchain-Struktur (6) zugeordnet ist, auf welcher zeitversetzt Daten zu privaten Transaktionen hinterlegt werden, wobei die Daten jeweils einen Zeitstempel (timestamp)-Block mit Informationen zum Zeitpunkt der Transaktion umfassen und anhand von mindestens einem Zeitstempel- Block, insbesondere von dem letzten in der Blockchain-Struktur (6) vorhandenen Zeitstempel-Block (7), überwacht wird, ob die Lizenz gültig ist. Ferner betrifft die Erfindung ein Computerprogramm-Produkt, sowie ein computerlesbares Medium.

## Beschreibung

Die vorliegende Erfindung betrifft ein Verfahren, insbesondere ein computergestütztes Verfahren, zum Überwachen der Gültigkeit einer zeitlich befristeten Lizenz für ein Gerät, insbesondere für eine Funktionalität eines Geräts, bevorzugt für ein Softwareprodukt auf einem Gerät, eines Anwenders.

Ferner betrifft die Erfindung ein Computerprogramm-Produkt und ein computerlesbares Medium.

Insbesondere bei Softwareprodukten etabliert sich zunehmend das Geschäftsmodell, wonach Anwender für einen bestimmten Zeitraum ein Nutzungsrecht bzw. eine Lizenz an dem Softwareprodukt erwerben. Das bedeutet, dass nach dem Erwerb und der Bezahlung für einen definierten Zeitraum das von einem Anbieter zur Verfügung gestellte Softwareprodukt genutzt werden kann. Der Anbieter des Softwareprodukts möchte sicherstellen, dass nach Ablauf dieses Nutzungszeitraums eine weitere Benutzung nicht mehr möglich ist, bzw. eine Verlängerung oder ein Neuerwerb des Softwareprodukts erforderlich ist.

In der Regel verfügen entsprechende Geräte über eine interne Uhr. Auf Basis solcher internen Zeitangaben kann ohne größere Probleme überwacht werden, ob eine Lizenz für ein Gerät, beispielsweise für ein Softwareprodukt, noch gültig ist oder die Lizenz zwischenzeitlich abgelaufen ist.

Eine solche Überwachung ist zwar relativ einfach, aber nicht manipulationssicher. Denn in der Regel eröffnet jedes Gerät dem Anwender die Möglichkeit, das Datum und die Uhrzeit auf der internen Uhr zu verändern. Praktisch wäre es möglich, regelmäßig das Datum zurückzustellen, so dass - trotz Ablauf der zeitlich befristeten Lizenz - die Lizenz nach wie vor als gültig erkannt wird. Dies würde dazu führen, dass das Gerät ohne Probleme praktisch unbegrenzt weiter genutzt werden kann.

Um dieser Problematik zu begegnen, besteht die Möglichkeit, das betreffende Gerät mit einem Network Time Protocol (NTP)-Server zu verbinden. Insbesondere kann es sich dabei um einen trusted, d. h. einen besonders zuverlässigen NTP-Server handeln. Auf diese Weise kann permanent die korrekte Uhrzeit zur Verfügung gestellt werden. Eine Manipulation der Uhrzeit ist nicht mehr möglich. Allerdings ist diese Lösung nicht für sämtliche Geräte geeignet, insbesondere da Geräte, die sich beispielsweise in Industrieanlagen befinden, häufig nicht mit dem Internet verbunden sind und damit eine permanente Verbindung zu einem NTP-Server nicht möglich ist. Außerdem sind zusätzliche Kommunikationskanäle erforderlich, was mit einem erhöhten Aufwand verbunden ist.

Um ein unberechtigtes Vervielfältigen von Lizenzen durch einen Anwender zu verhindern, wird zunehmend bei der Verwaltung von Lizenzen auf die Blockchain-Technologie zurückgegriffen. In diesem Fall können non-fungible Tokens, d.h. einzigartige, nicht vervielfältigbare Tokens, praktisch als digitale Zwillinge von Lizenzen verwendet werden. Diese werden üblicherweise von einem Anbieter generiert und bereitgestellt und in ein dem jeweiligen Gerät zugeordnetes Wallet übertragen, um das Gerät bzw. eine Funktionalität des Geräts, bevorzugt ein Softwareprodukt auf diesem Gerät, zur Benutzung durch den Anwender freizugeben. Transaktionsdaten betreffend die Übertragung an das gerätebezogene Wallet werden dabei in einer Blockchain-Datenstruktur abgelegt. Aufgrund der hohen Manipulationssicherheit der Blockchain-Datenstruktur ist zum einen festgelegt, welches Gerät von welchem Anwender über die Lizenz verfügt. Zum anderen ist eine unberechtigte Vervielfältigung des die Lizenz repräsentierenden non-fungible Tokens oder die Manipulation in der Blockchain-Datenstruktur aufgrund der Synchronisierung in einer Vielzahl von Knoten in einem Blockchain-Netzwerk weitgehend ausgeschlossen.

Allerdings hat die Blockchain-Technologie üblicherweise keine Systemuhrzeit, sondern es wird dem betreffenden Block lediglich ein Zeitstempel zugewiesen, der den Zeitpunkt der Transaktion wiedergibt. Solange keine neuen Blöcke erzeugt werden, wird auch somit kein neuer Zeitstempel generiert, was eine Überwachung der verbleibenden Nutzungsdauer einer Lizenz sehr schwierig macht. Mit anderen Worten gibt der Zeitstempel nicht die aktuelle Zeit, sondern lediglich den Zeitpunkt der letzten vorgenommenen Transaktion an. Außerdem besteht auch hier die Problematik, dass die Geräte nicht immer permanent mit dem Netzwerk, d.h. mit anderen Knoten des Blockchain-Netzwerkes, verbunden sind. Darüber hinaus basieren die Zeitstempel auf probabilistischen Vorgängen, so dass eine Abweichung zur realen Systemzeit vorkommen kann.

Vor diesem Hintergrund besteht die Aufgabe der vorliegenden Erfindung darin, ein Verfahren zum Überwachen der Gültigkeit einer zeitlich befristeten Lizenz bereitzustellen, welches sich durch eine hohe Zuverlässigkeit und eine hohe Manipulationssicherheit auszeichnet.

Diese Aufgabe ist bei einem Verfahren der eingangs genannten Art dadurch gelöst, dass dem Gerät eine Blockchain-Struktur zugeordnet ist, auf welcher zeitversetzt Daten zu privaten Transaktionen hinterlegt werden, wobei die Daten jeweils einen Zeitstempel (Timestamp)-Block mit Informationen zum Zeitpunkt der Transaktion umfassen und anhand von mindestens einem Zeitstempel-Block, insbesondere von dem letzten in der Blockchain-Struktur vorhandenen Zeitstempel-Block, überwacht wird, ob die Lizenz gültig ist.

Der Erfindung liegt die grundsätzliche Überlegung zugrunde, durch das regelmäßige Generieren von privaten Transaktionen in einer Blockchain-Struktur regelmäßig Transaktionsdaten mit einem entsprechenden Zeitstempel abzulegen, so dass die manipulationssichere Blockchain-Struktur dazu verwendet werden kann, regelmäßig Informationen über die aktuelle Zeit zur Verfügung zu stellen. Mit anderen Worten wird eine eigene Blockchain-Struktur geschaffen, auf der regelmäßig Transaktionsdaten mit entsprechenden Zeitstempeln abgelegt werden. Dabei kann eine Blockchain-Struktur mehreren Geräten, die insbesondere in einem Netzwerk miteinander verbunden sind, zugeordnet werden. Möglich ist auch, dass jedem Gerät eine eigene Blockchain-Struktur zugeordnet ist.

Bei einer Blockchain handelt es sich um eine verteilte, dezentrale Datenbank, in der Daten zur Transaktion manipulationsgeschützt abgelegt werden können. Eine Blockchain-Struktur enthält eine Vielzahl von Blöcken, wobei die einzelnen Blöcke nacheinander der vorhandenen Struktur hinzugefügt werden. Neben einer oder mehreren Transaktionen ist in jedem Block ein sogenannter Hashwert eines Vorgängerblocks hinterlegt. Der hohe Sicherheitsstandard einer Blockchain-Struktur entsteht durch eine Mehrheit von vertrauenswürdigen Knoten in einem Blockchain-Netz oder -Netzwerk, welches ein sogenanntes Validieren von Blöcken durchführt.

Die Kette der Blöcke ist somit bei einer Vielzahl von Blockchain-Knoten gespeichert und es erfolgt regelmäßig eine Synchronisation der teilnehmenden Knoten. Die Information zu den privaten Transaktionen ist also redundant im Blockchain-Netzwerk hinterlegt.

Da alle Blöcke basierend auf bestehenden Blöcken gebildet werden, bei dem der Hashwert des Vorgängerblocks in einen neuen Block eingefügt wird, bildet sich eine Kette. Die Transaktionen sind somit vor Manipulationen geschützt, da eine Kette bis zu einem initialen Block durch die Verkettung der Blöcke nachvollzogen werden kann. Da die Transaktionen über das Blockchain-Netz verfügbar sind, kann nachvollzogen werden, ab welchem Block in der Kette beispielsweise ein Inhalt einer Transaktion nicht mehr mit der vorherigen Version übereinstimmt. Ein Abändern einer Transaktion in einem Block, der bereits zu einem früheren Zeitpunkt im Netzwerk gebildet wurde, würde nachvollzogen werden können, wenn der Hashwert nicht passend zum vorherigen Block ist.

Die Erfindung macht sich zunutze, dass in der Blockchain-Struktur regelmäßig private Transaktionen stattfinden, deren Transaktionsdaten mit einem Zeitstempel abgelegt werden. Diese privaten Transaktionen, welche beispielsweise in einem Netzwerk des Anwenders stattfinden können, führen somit zu regelmäßigen Informationen über den aktuellen Zeitpunkt. Bevorzugt finden die privaten Transaktionen innerhalb eines anwenderseitigen Netzwerks statt-Der wesentliche Zweck der privaten Transaktionen besteht darin, regelmäßig neue Blöcke in der Blockchain-Struktur zu schaffen und dabei Zeitinformationen abzulegen. Anhand dieser Informationen kann dann ermittelt werden, ob die Lizenz noch gültig ist, oder bereits abgelaufen ist. Konkret kann dazu die verbleibende Restdauer der Lizenz errechnet werden. Ist dieser Wert Null oder kleiner, so ist die Lizenz abgelaufen und wird gelöscht, was dazu führt, dass das entsprechende Gerät, insbesondere ein Softwareprodukt auf diesem Gerät, nicht mehr genutzt werden kann. Der Anwender muss in diesem Fall eine Neulizenz erwerben.

In konkreter Ausgestaltung kann die Blockchain-Struktur auf einem Blockchain-Netz abgelegt bzw. gespeichert werden. Hierbei kann es sich um ein Netz handeln, welches zumindest teilweise lokal beim Anwender angeordnet ist. Bevorzugt umfasst das Netz eine Mehrzahl von Knoten beim Anwender. Durch die Mehrzahl von Knoten entsteht eine hohe Manipulationssicherheit, da die Daten betreffend die privaten Transaktionen auf mehreren verschiedenen Geräten im Netz abgelegt werden. Das Blockchain-Netz kann auch vollständig beim Anwender angeordnet sein. Insbesondere kann das Blockchain-Netz nicht permanent mit dem Internet verbunden sein, bevorzugt nur gelegentlich mit dem Internet verbunden sein. In weiterer Ausgestaltung kann innerhalb des Blockchain-Netzes regelmäßig eine Synchronisierung stattfinden, so dass die Blockchain-Struktur anschließend auf jedem Knoten des Netzes auf dem jeweils aktuellen Stand ist.

In weiterer Ausgestaltung kann der Lizenz ein non-fungible Token zugeordnet sein, welches die jeweilige Lizenz repräsentiert und welches zum Freigeben des jeweiligen Geräts in einem gerätebezogenen Wallet abgelegt wird bzw. in ein solches übertragen wird, wobei Transaktionsdaten zum Übertragen des non-fungible Tokens in ein Wallet in einer Blockchain-Datenstruktur, insbesondere in einer anwenderbezogenen Sidechain, abgelegt werden.

Dieser Ausgestaltung liegt die Überlegung zugrunde, eine Blockchain-Datenstruktur hier für Lizenzen zu verwenden und dabei ein non-fungible Token als digitalen Zwilling einer Lizenz zu generieren oder bereitzustellen. Ein solches non-fungible Token kann nicht ohne weiteres kopiert werden, so dass ein unberechtigtes Vervielfältigen von Lizenzen durch bösgläubige Anwender ausgeschlossen ist. Konkret kann ein solches non-fungible Token von einem privaten Lizensierungs-Netzwerk eines Anbieters bereitgestellt oder erzeugt werden.

Die Blockchain-Datenstruktur zum Ablegen von Transaktionsdaten betreffend die non-fungible Tokens kann jedem Anwender zugeordnet eine Sidechain aufweisen, in welche die Transaktionsdaten betreffend die Übertragung der non-fungible Tokens jeweils abgelegt werden. Praktisch wird in diesem Fall die Blockchain-Datenstruktur zerteilt und für jeden Anwender wird eine eigene Sidechain, welche prinzipiell aufgebaut ist wie eine Blockchain, gebildet. Die jeweilige Sidechain enthält lediglich die Transaktionsdaten betreffend einen Anwender. Bevorzugt ist nicht öffentlich einsehbar, welcher Anwender gerade über welche Lizenz verfügt. Mit anderen Worten kann auf der einen Seite so die hohe Datensicherheit von non-fungible Tokens als digitale Zwillinge der Lizenz genutzt werden, gleichzeitig wird aber eine Vertraulichkeit der Daten des einzelnen Anwenders gewährleistet, da diese Transaktionsdaten aufgrund deren Unterbringung in einer Sidechain nicht für die gesamte Öffentlichkeit einsehbar sind. Bevorzugt hat der jeweilige Anwender lediglich Zugang zu den seine Geräte betreffende Sidechains. Ein privates Lizensierungs-Netzwerk kann Zugang zu sämtlichen Sidechains haben.

Die Blockchain-Datenstruktur kann bezogen auf ein Softwareprodukt ausgebildet sein. Das bedeutet, dass verschiedene Softwareprodukte unterschiedliche Blockchain-Datenstrukturen insbesondere zur Lizenzverwaltung nutzen können. Damit kann auch jede anwenderbezogene Sidechain bezogen auf ein Softwareprodukt ausgebildet sein. Mit anderen Worten betrifft in diesem Fall die Sidechain nicht nur einen spezifischen Anwender, sondern auch ein spezifisches Softwareprodukt. Eine Auftrennung in unterschiedliche, jeweils softwareproduktbezogene Blockchain-Datenstrukturen kann auf Basis von Smart Contracts erfolgen.

Ein Wallet ist insbesondere eine Software, die es ermöglicht, digitale Objekte wie non-fungible Tokens zu speichern.

Bei dem Übertragen des non-fungible Tokens in das gerätbezogene Wallet kann ein Abgleich der internen Uhrzeit des Geräts mit dem privaten Lizensierungs-Netzwerk, insbesondere mit einem in dem privaten Lizensierungs-Netzwerk enthaltenen NTP-Server stattfinden. Diese Ausgestaltung basiert auf der Überlegung, dass das Gerät bei der Übertragung des non-fungible Tokens, welcher eine Lizenz repräsentiert, mit dem privaten Lizensierungs-Netzwerk verbunden ist und somit ein Zugang zu einer externen Information über die aktuelle Zeit besteht.

In weiterer Ausgestaltung kann das non-fungible Token auf Basis eines Smart Contracts erstellt, bereitgestellt oder erzeugt werden. Ein solcher Smart Contract vereinbart bestimmte Bedingungen, die in der Blockchain-Datenstruktur hinterlegt sind. Insbesondere kann ein Smart Contract als wenn-dann-Bedingung definiert sein. Wenn also eine bestimmte Bedingung erfüllt ist, wird der Vertrag automatisch über das Netzwerk abgewickelt. Eine externe Überprüfung der Vertragsbedingungen ist nicht erforderlich, da ein Smart Contract automatisch bei Erfüllung der Bedingungen ausgeführt wird.

Das non-fungible Token kann nach dem ERC721-Standard bereitgestellt oder erzeugt werden. Das Übertragen des non-fungible Tokens in ein gerätebezogenes Wallet kann nach dem ERC721-Standard erfolgen. Bei dem ERC721-Standard handelt es sich um eine Blockchain-Datenstruktur basierend auf Ethereum. Insbesondere kann eine Ethereum Virtual Machine benutzt werden, um die Vereinbarungen in einem Smart Contract zu beurteilen.

Das non-fungible Token kann in einem privaten Lizensierungs-Netzwerk eines Anwenders generiert werden und insbesondere über das Internet in das jeweilige gerätbezogene Wallet übertragen werden. Durch ein privates Lizensierungs-Netzwerk, welches von einem Anbieter betrieben wird, ist sichergestellt, dass nur der Anbieter definiert non-fungible Tokens erstellen kann, wenn eine Lizenz von einem Anwender benötigt, angefordert und/oder erworben wird. Damit hat der Anbieter die vollständige Kontrolle über das Kreieren von Lizenzen.

Das erfindungsgemäße Verfahren kann dadurch gekennzeichnet sein, dass die erstmalige Übertragung des non-fungible Tokens in ein gerätebezogenes Wallet eines Anwenders die Blockchain-Struktur generiert. Mit anderen Worten führt nach dem Generieren eines non-fungible Tokens bevorzugt in einem privaten Lizensierungs-Netzwerk und die anschließende erstmalige Übertragung des non-fungible Tokens in ein gerätebezogenes Wallet eines Anwenders zur Generierung oder Schaffung der Blockchain-Struktur, in welcher zeitversetzt Daten zu privaten Transaktionen hinterlegt werden. Wird also bei einem Anwender erstmals ein non-fungible Token in ein Wallet übertragen, so wird die Blockchain-Struktur generiert.

Die erstmalige Übertragung des non-fungible Tokens in ein gerätebezogenes Wallet kann einen Block mit einem Aktivierungs-Zeitstempel in der Blockchain-Struktur erzeugen. Das bedeutet, dass zu dem Zeitpunkt der Übertragung in ein gerätebezogenes Wallet und damit der Freigabe des entsprechenden Gerätes für den Anwender ein definierter Zeitstempel erzeugt wird, welcher spezifisch die erstmalige Aktivierung des Geräts bzw. der Funktionalität oder des Softwareprodukts, indiziert.

Zur Steigerung der Datensicherheit und der Manipulationssicherheit kann der Aktivierungs-Zeitstempel durch das private Lizensierungs-Netzwerk eines Anbieters signiert werden. Durch eine solche Signierung kann ausgeschlossen werden, dass beispielsweise bösgläubige Anwender selbst solche initialen Aktivierungs-Zeitstempel setzen und eine unberechtigte Nutzung der Lizenz möglich wird. Bevorzugt werden weitere Transaktionen durch das jeweilige Wallet, von welchem die Transaktion ausgeht, signiert.

In weiterer Ausgestaltung kann das non-fungible Token, welches eine Lizenz repräsentiert, Informationen zur maximalen Nutzungsdauer der Lizenz enthalten. Derartige Informationen sind auch manipulationssicher, da sie Bestandteil des non-fungible Tokens sind. Dadurch können Anwender nicht beabsichtigt oder unbeabsichtigt die Nutzungsdauer verändern. Insbesondere in Verbindung mit einem Aktivierungs-Zeitstempel, welcher bevorzugt durch das private Lizensierungs-Netzwerk signiert werden muss, kann so eine hohe Manipulationssicherheit erzielt werden, da zum einen der Aktivierungs-Zeitpunkt und die Nutzungsdauer der Lizenz in der Blockchain-Struktur bzw. in der Blockchain-Datenstruktur manipulationssicher abgelegt sind.

Zur Überprüfung, ob die Lizenz noch gültig ist, kann der Smart Contract das non-fungible Token veranlassen, den letzten verfügbaren Zeitstempel-Block der Blockchain-Struktur abzufragen und davon ausgehend die verbleibende Nutzungsdauer des non-fungible Tokens bzw. der von diesem repräsentierten Lizenz zu berechnen.

Bevorzugt werden die privaten Transaktionen durch einen Zeiterfassungs-Smart Contract ausgelöst. Das bedeutet, dass ein separater Smart Contract existiert, welcher zu privaten Transaktionen, insbesondere im anwenderseitigen Netzwerk, führt. Bevorzugt werden die privaten Transaktionen ausschließlich lokal in einem Netzwerk des Anwenders gespeichert.

Der Zeiterfassungs- Smart Contract kann in regelmäßigen Abständen den Aufruf eines anwenderseitigen Network-Time-Protocol (NTP)-Servers veranlassen. Der Zeiterfassungs-Smart Contract kann hier auf ein Oracle zurückgreifen, durch welches bestimmte Bedingungen in Smart Contracts geprüft werden können. Solche Oracles, welche hier auch als Remote Clock Oracle bezeichnet werden, können damit auf Daten außerhalb des Blockchain-Netzwerks zugreifen. Mit anderen Worten kann ein Oracle eine Software sein, welche ausgebildet ist, auf Informationen außerhalb des Blockchain-Netzwerks zuzugreifen. Dementsprechend ist vorgesehen, zusätzlich zu der internen Uhr des Geräts, die nicht manipulationssicher ist, in regelmäßigen Abständen durch den Smart Contract auf einem Oracle einen anwenderseitigen, d.h. lokalen NTP-Servers anzurufen, um eine Information über die aktuelle Zeit zu erhalten. Ein solcher Aufruf oder Anruf eines anwenderseitigen NTP-Servers kann in regelmäßigen Abständen erfolgen. Beispielsweise kann einmal pro Tag ein solcher Aufruf erfolgen. Findet ein Kontakt statt, so kann für einen weiteren Zeitraum von 24 Stunden kein weiterer Versuch eines Verbindungsaufbaus ausgeschlossen werden. Möglich sind auch Versuche dreimal pro Stunde, wobei nach einer bestimmten Anzahl von Fehlversuchen für einen weiteren Zeitraum zunächst ein weiterer Versuch unternommen wird. Dadurch kann, selbst wenn ein Gerät nur unregelmäßig mit einem anwenderseitigen Netzwerk verbunden ist, zumindest gelegentlich eine aktuelle Information über die Zeit erhalten werden.

In weiterer Ausgestaltung kann der Zeiterfassung- Smart Contract bei Kontakt mit dem anwenderseitigen NTP-Server eine neue private Transaktion auslösen, zu welcher Daten in der Blockchain-Struktur hinterlegt werden, welche einen Zeitstempelblock mit Informationen zur aktuellen Zeit umfassen. Sollte also ein Kontakt mit einem anwenderseitigen NTP-Server zustande kommen, so wird basierend auf dem Zeiterfassungs- Smart Contract automatisch eine neue private Transaktion ausgelöst und die entsprechenden Daten in der Blockchain-Struktur hinterlegt. Dadurch entsteht ein Zeitstempel-Block mit der aktuellen Uhrzeit.

Ferner kann der Zeiterfassung- Smart Contract in regelmäßigen Abständen den Aufruf eines externen NTP-Servers, insbesondere eines NTP-Servers des privaten Lizensierungs-Netzwerks, veranlassen. Hierzu kann insbesondere ein Remote Clock Oracle eingesetzt werden bzw. der Zeiterfassungs- Smart Contract darauf zugreifen. Als weitere Möglichkeit, um insbesondere eine verifizierte, aktuelle Uhrzeit zu erhalten, kann somit in regelmäßigen Abständen, beispielsweise einmal pro Woche oder höchstens dreimal am Tag, ein NTP-Server beispielsweise über das Internet, welcher durch den Anbieter bzw. das private Lizensierungs-Netzwerk bereitgestellt wird, kontaktiert werden. Dies schafft insbesondere zusätzlich zu der internen Uhr des Geräts und gegebenenfalls einem anwenderseitigen NTP-Server eine zusätzliche Möglichkeit, Informationen über die aktuelle Uhrzeit zu erhalten. Eine solche Verbindung kann natürlich nur dann zustande kommen, wenn das Gerät zumindest mittelbar über das Internet mit dem externen NTP-Server verbunden ist. In den Zeiträumen, in denen eine solche Verbindung nicht besteht, kann die Uhrzeit lediglich auf Basis des anwenderseitigen NTP-Servers oder der internen Uhrzeit des Geräts ermittelt werden.

Der Zeiterfassungs- Smart Contract bzw. ein Oracle kann auch in regelmäßigen Abständen sowohl einen anwenderseitigen, d.h. lokalen NTP-Server, als auch einen externen NTP-Server kontaktieren.

Bevorzugt löst der Zeiterfassungs- Smart Contract in regelmäßigen Abständen private Transaktionen aus, deren Daten in der Blockchain- Struktur hinterlegt werden, welche einen Zeitstempel-Block mit Informationen zur aktuellen Zeit basierend auf der internen Uhr des Geräts umfassen. Anders ausgedrückt werden automatisiert regelmäßig Transaktionen durch den Zeiterfassungs- Smart Contract veranlasst, welche - insbesondere sofern keine Verbindung zu einem anwenderseitigen, d. h. lokalen NTP-Server oder einem externen NTP-Server besteht - auf der internen Uhr des Geräts basieren. Hierzu kann der Zeiterfassungs-Smart Contract auf ein Oracle, insbesondere ein local clock oracle, zurückgreifen. Beispielsweise können solche automatisierten Transaktionen jede Stunde, jede halbe Stunde oder jede Viertelstunde ausgeübt werden, um einen neuen Zeitstempel zu generieren. Durch die Speicherung der Daten betreffend die regelmäßigen privaten Transaktionen kann die Manipulation der internen Uhr des Geräts erschwert werden, da regelmäßig Zeitstempel in der Blockchain- Struktur hinterlegt werden, selbst wenn das Gerät nicht mit einem NTP-Server verbunden ist oder zumindest gelegentlich mit einem solche Server verbunden wird. Ein Zurückstellen der internen Uhr des Geräts durch den Anwender würde dann durch die Zeitstempel in der Blockchain- Struktur erkannt werden.

Das Verfahren kann dadurch gekennzeichnet sein, dass nach einer neuen privaten Transaktion, deren Transaktionsdaten auf der Blockchain-Struktur hinterlegt werden, frühere Blöcke der Blockchain-Struktur gelöscht oder zusammengefasst werden. Insbesondere kann eine solche Löschung dann stattfinden, wenn eine neue private Transaktion auf einen Kontakt mit dem externen NTP-Server basiert, da es sich hier um eine besonders vertrauenswürdige Zeitinformation handelt. Durch das Entfernen früherer Blöcke aus der Blockchain-Struktur kann das Datenvolumen verringert werden.

Möglich ist auch, dass ein Gerät in einem Gerätenetzwerk mit anderen Geräten verbunden ist, selbst wenn es nicht mit dem Internet oder mit einem anderen Knoten verbunden ist. Insbesondere in diesem Fall kann eine Synchronisierung der Blöcke betreffend die Transaktionsdaten innerhalb dieses Geräte-Netzwerks stattfinden. Bevorzugt kann eine private Sidechain der Blockchain-Struktur gebildet werden, in welcher die privaten Transaktionen der verschiedenen Geräte abgelegt sind. Auch in diesem Fall kann eine hohe Sicherheit hinsichtlich der Uhrzeit erzielt werden, selbst wenn Geräte zu keinem Zeitpunkt mit dem Internet verbunden werden.

Bei einem Gerät kann es sich praktisch um ein beliebiges technisches Gerät handeln. Das Gerät kann eine Hardware umfassen und mindestens eine Software oder ein Softwareprodukt. Insbesondere kann die Lizenz dazu dienen, die Software oder das Softwareprodukt auf dem Gerät zur Benutzung freizugeben. Bei dem Gerät kann es sich insbesondere um ein Gerät handeln, welches Sensoren zum Erfassen von Betriebsparametern in einem Produktionsprozess aufweist oder mit solchen verbunden ist. Das Gerät kann eine Rechnereinheit und/oder Speichermittel aufweisen, auf welchen ein Softwareprodukt gespeichert ist und ablaufen kann. Die Lizenz kann sich insbesondere auf die Freigabe eines Softwareprodukts auf dieses Gerät beziehen. Bei der Software bzw. dem Softwareprodukt kann es sich zum Beispiel um eine Betriebssoftware und/oder eine Steuerungssoftware und/oder eine Konfigurationssoftware zum Einrichten von technischen Geräten oder Anlagen handeln. Das Gerät kann ferner ausgebildet sein, mit anderen Geräten eines Geräte-Netzwerks zu kommunizieren. Hierzu kann es in an sich bekannter Weise kabellose oder kabelgebundene Schnittstellen aufweisen.

Für die weitere Ausgestaltung der Erfindung wird auf die Unteransprüche und auf die nachfolgende Beschreibung eines Ausführungsbeispiels unter Bezugnahme auf die Zeichnung verwiesen.

In der Zeichnung zeigen:
Figur 1 ein Verfahren gemäß der vorliegenden Erfindung in schematischer Darstellung;
Figur 2 ein System zur Durchführung des erfindungsgemäßen Verfahrens in schematischer Darstellung.

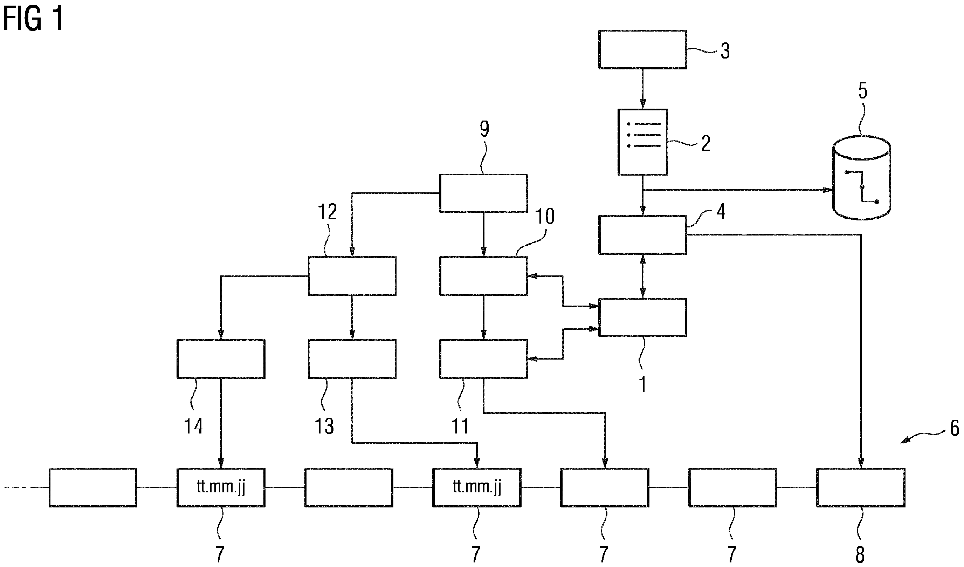

In der Figur 1 ist ein Ausführungsbeispiel eines erfindungsgemäßen Verfahrens zum Überwachen der Gültigkeit einer zeitlich befristeten Lizenz für ein Gerät, bevorzugt für ein Softwareprodukt auf diesem Gerät, eines Anwenders schematisch dargestellt. Der Lizenz ist ein non-fungible Token 2 zugeordnet, welches die jeweilige Lizenz repräsentiert. Das non-fungible Token 2 wird auf einem privaten Lizensierungs-Netzwerk 3 generiert. Über das Internet wird das erzeugte non-fungible Token 2 von dem privaten Lizensierungs-Netzwerk 3 in ein Wallet 4, welches dem Gerät 1 zugeordnet ist, übertragen. Die Transaktionsdaten zum Übertragen des non-fungible Tokens 2 in das gerätebezogene Wallet werden in einer Blockchain-Datenstruktur 5, welche in der Figur 1 lediglich schematisch dargestellt ist, abgelegt. Bevorzugt umfasst die Blockchain-Datenstruktur 5 eine Vielzahl von softwareprodukt- und anwenderbezogenen Sidechains, in welche die jeweiligen Transaktionsdaten betreffend das jeweilige Gerät und den jeweiligen Anwender abgelegt werden.

Dem Gerät 1 ist ferner eine Blockchain-Struktur 6 zugeordnet, auf welcher zeitversetzt Daten zu privaten Transaktionen hinterlegt werden. Die Daten zu den privaten Transaktionen umfassen jeweils einen Zeitstempel-Block 7 mit Informationen zum Zeitpunkt der Transaktion.

Beim erstmaligen Übertragen des non-fungible Tokens 2 in das gerätebezogene Wallet 4 wird die Blockchain-Struktur 6 generiert und ein Aktivierungs-Zeitstempel 8 in der Blockchain-Struktur erzeugt. Der Aktivierungs-Zeitstempel 8 wird dabei durch das private Lizensierungs-Netzwerk 3 signiert.

Ferner existiert ein Zeiterfassungs- Smart Contract 9, welcher private Transaktionen auslöst. In regelmäßigen Abständen wird durch den Zeiterfassungs- Smart Contract 9 die aktuelle Uhrzeit ermittelt und eine private, d.h. lokal ablaufende Transaktion ausgelöst. Zum einen wird in regelmäßigen Abständen über ein sogenanntes Local Clock Oracle 10 die lokale Uhrzeit 11 des Geräts 1 ermittelt. Sodann wird eine private Transaktion ausgelöst, wobei Daten betreffend diese Transaktion in der Blockchain-Struktur 6 abgelegt werden. Die Daten umfassen dabei einen Zeitstempel-Block 7, welcher die aktuelle Uhrzeit enthält.

Zusätzlich zu der regelmäßigen Abfrage der lokalen Uhrzeit 11 im Gerät 1 wird über ein sogenanntes Remote-Clock-Oracle 12 auf Veranlassung des Zeiterfassungs-Smart Contracts 9 der Aufruf eines anwenderseitigen Networktime (NTP)-Servers 13 veranlasst. Besteht Kontakt zu diesem anwenderseitigen NTP-Server 13, so wird durch den Zeiterfassungs-Smart Contract 9 eine neue private Transaktion ausgelöst, zu welcher Daten in der Blockchain-Struktur 6 hinterlegt werden. Diese Daten umfassen ebenfalls einen Zeitstempel-Block 7 mit Informationen zur aktuellen Zeit.

Darüber hinaus veranlasst der Zeiterfassungs- Smart Contract 9 in regelmäßigen Abständen den Aufruf eines externen NTP-Servers 14. Falls ein Kontakt mit dem externen NTP-Server 14 besteht, so löst der Zeiterfassungs- Smart Contract 9 eine neue private Transaktion aus, deren Transaktionsdaten ebenfalls in der Blockchain-Struktur 6 hinterlegt werden und einen Zeitstempel-Block mit Informationen zur aktuellen Zeit umfassen.

Das Verfahren kann derart ausgestaltet sein, dass beim Erstellen eines neuen Zeitstempel-Blocks 7 vorherige Zeitstempel-Blöcke 7 gelöscht oder zusammengefasst werden. Das Zusammenfassen wird auch als Compaction bezeichnet. Auf diese Weise kann die Datenmenge der Blockchain-Struktur 6 gering gehalten werden.

Die Blockchain-Struktur 6 ist in einem Blockchain-Netz gespeichert, welches lokal beim Anwender angeordnet ist.

Auf diese Weise können unterschiedliche Quellen zur Ermittlung der aktuellen Uhrzeit ermittelt werden. Dabei beschränkt sich die Ermittlung der aktuellen Uhrzeit nicht auf die auf relativ einfache Weise manipulierbare lokale Uhrzeit des Geräts 1, sondern es werden Informationen von einem anwenderseitigen (internen) NTP-Server 13 und von einem externen NTP-Server 14 herangezogen, sobald zumindest ein temporärer Kontakt mit diesen Servern 13, 14 besteht.

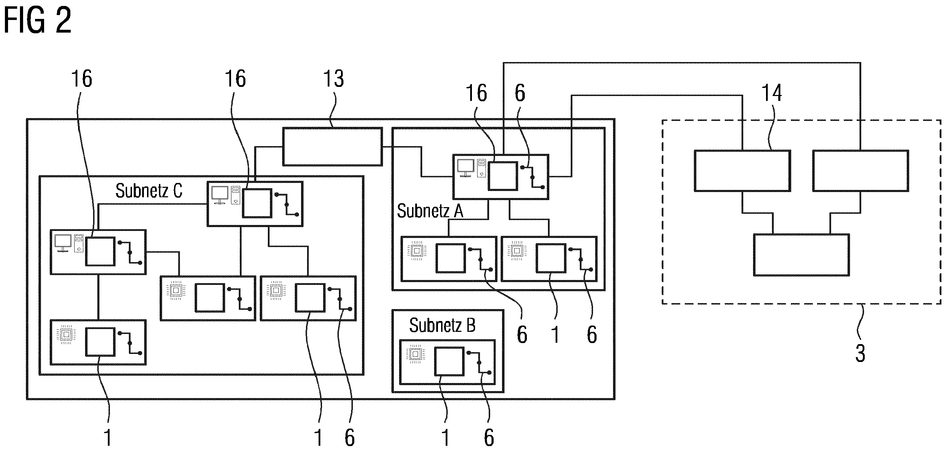

Die Figur 2 zeigt ein System zur Durchführung des erfindungsgemäßen Verfahrens in einer schematischen Darstellung. Dieses System umfasst ein anwenderseitiges Netzwerk 15 mit einer Vielzahl von Geräten 1 und einem anwenderseitigen NTP-Server 13. Über das Internet ist zumindest ein Teil des Systems, konkret die Geräte 1, welche mit Subnetz (Subnet) A bezeichnet sind, mit einem privaten Lizensierungs-Netzwerk 3 des Anbieters verbunden. Dieses Lizensierungs-Netzwerk 3 umfasst einen externen NTP-Server 14, der vertrauenswürdig Informationen zur aktuellen Uhrzeit bereitstellt.

Das erfindungsgemäße Verfahren sieht nun vor, dass regelmäßig private Transaktionen, welche von einem nicht dargestellten Zeiterfassungs- Smart Contract 9 ausgelöst werden, ausgeführt und dabei Zeitstempel-Blöcke 7 mit Informationen zur aktuellen Zeit in einer Blockchain-Struktur 6 hinterlegt werden.

Das Gerät 1, welches im Subnetz B enthalten ist, ist dabei mit keinem anderen Gerät permanent verbunden. Das erfindungsgemäße Verfahren beschränkt sich somit darauf, regelmäßig private Transaktionen durchzuführen, wobei Zeitstempel-Blöcke in einer lokalen Blockchain-Struktur abgelegt werden, die ihre Informationen aus der internen Uhr des Geräts 1 erhalten.

Die Geräte, die im Subnetz A enthalten sind, sind über einen zwischengeschalteten PC 16 mit einem anwenderseitigen NTP-Server 13 und einem externen NTP-Server 14 verbunden. Der PC 16 fungiert dabei als Mediator für die Geräte 1. Aufgrund der permanenten Verbindung der Geräte 1 über den PC 16 mit dem externen NTP-Server 14 können regelmäßig private Transaktionen erzeugt werden, die auf der jeweiligen Blockgeräte bezogenen Blockchain-Struktur 6 abgelegt werden und einen aktuellen Zeitstempel-Block 7 basierend auf Informationen des externen NTP-Servers 14 enthalten.

Die Geräte 1, welche dem Subnetz C zuzuordnen sind, sind über PC 16 mit dem anwenderseitigen NTP-Server 13 verbunden. Das bedeutet, dass bei Kontakt mit dem anwenderseitigen NTP-Server 13 regelmäßig Zeitstempel-Blöcke mit Informationen zur aktuellen Zeit in der jeweiligen Blockchain-Struktur 6 hinterlegt werden.

Jedes Gerät 1 und jeder PC 16 besitzt dabei zunächst eine eigenständige Blockchain-Struktur 6.

Vor dem Hintergrund der in der Figur 2 dargestellten Architektur kommt es vor, dass einzelne Geräte 1, insbesondere die des Subnetzes C, zu keinem Zeitpunkt über das Internet mit dem besonders vertrauenswürdigen externen NTP-Server 14 verbunden sind. Es ist allerdings möglich, dass die verschiedenen Blockchain-Strukturen 6 untereinander zwischen den miteinander verbundenen Geräten ausgetauscht werden, so dass auch die im Subnetz C enthaltenen Geräte 1 über den anwenderseitigen NTP-Server 13, welcher wiederum mit dem PC 16 des Subnetz A verbunden ist, sich synchronisieren. Auf diese Weise können auch die Geräte 1 des Subnetz C mittels dieser Synchronisierung auf die besonders vertrauenswürdigen Zeitinformationen des externen NTP-Servers 14, welcher in das private Lizensierungs-Netzwerk 3 integriert ist, indirekt zugreifen. Dadurch erhöht sich weiter die Manipulationssicherheit und die Genauigkeit der Zeitinformationen.

Anhand der Zeitstempel-Blöcke 7, insbesondere des letzten in der jeweiligen Blockchain-Struktur 6 vorhandenen Zeitstempelblock 7, wird überwacht, ob die Lizenz, welche das non-fungible Token 2 repräsentiert, noch gültig ist. Konkret ist dazu auf dem non-fungible Token 2 eine Information zur maximalen Nutzungsdauer der Lizenz enthalten. Der Smart Contract veranlasst das non-fungible Token 2, den letzten verfügbaren Zeitstempel-Block 7 der jeweiligen Blockchain-Struktur 6 abzufragen und davon ausgehend die verbleibende Nutzungsdauer des non-fungible Tokens 2 bzw. der von diesem repräsentierten Lizenz zu berechnen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Unabhängig vom grammatikalischen Geschlecht eines bestimmten Begriffes sind Personen mit männlicher, weiblicher oder anderer Geschlechteridentität mit umfasst.

## Patentansprüche

1. Verfahren, insbesondere computergestütztes Verfahren, zum Überwachen der Gültigkeit einer zeitlich befristeten Lizenz für ein Gerät (1), insbesondere für eine Funktionalität eines Geräts (1), bevorzugt für ein Softwareprodukt auf einem Gerät (1), eines Anwenders, wobei dem Gerät (1) eine Blockchain-Struktur (6) zugeordnet ist, auf welcher zeitversetzt Daten zu privaten Transaktionen hinterlegt werden, wobei die Daten jeweils einen Zeitstempel (timestamp)-Block mit Informationen zum Zeitpunkt der Transaktion umfassen und anhand von mindestens einem Zeitstempel- Block, insbesondere von dem letzten in der Blockchain-Struktur (6) vorhandenen Zeitstempel-Block (7), überwacht wird, ob die Lizenz gültig ist.

2. Verfahren nach Anspruch 1, **dadurch gekennzeichnet, dass** die Blockchain-Struktur (6) auf einem Blockchain-Netz abgelegt bzw. gespeichert ist, wobei, insbesondere, das Blockchain-Netz lokal beim Anwender angeordnet ist, wobei es bevorzugt eine Mehrzahl von Knoten beim Anwender umfasst.

3. Verfahren nach einem der vorherigen Ansprüche, **dadurch gekennzeichnet, dass** der Lizenz ein non-fungible Token (2) zugeordnet ist, welches die jeweilige Lizenz repräsentiert und welches zum Freigeben des jeweiligen Geräts (1) in einem gerätebezogenen Wallet (4) abgelegt wird, wobei Transaktionsdaten zum Übertragen des non-fungible Tokens (2) in ein Wallet (4) in einer Blockchain-Datenstruktur (5), insbesondere in einer anwenderbezogenen Sidechain, abgelegt werden.

4. Verfahren nach Anspruch 3, **dadurch gekennzeichnet, dass** das non-fungible Token (2) auf Basis eines Smart Contracts erstellt wird.

5. Verfahren nach Anspruch 3 oder 4, **dadurch gekennzeichnet, dass** das non-fungible Token (2) in einem privaten Lizensierungs-Netzwerk eines Anwenders generiert wird und insbesondere über das Internet in das jeweilige gerätebezogene Wallet (4) übertragen wird.

6. Verfahren nach einem der Ansprüche 3 bis 5, **dadurch gekennzeichnet, dass** die erstmalige Übertragung des non-fungible Tokens (2) in ein gerätebezogenes Wallet (4) eines Anwenders die Blockchain-Struktur (6) generiert

7. Verfahren nach einem der Ansprüche 3 bis 6, **dadurch gekennzeichnet, dass** die erstmalige Übertragung des non-fungible Tokens (2) in ein gerätebezogenes Wallet einen Block mit einem Aktivierungs-Zeitstempel (8) in der Blockchain-Struktur (6) erzeugt.

8. Verfahren nach Anspruch 7, **dadurch gekennzeichnet, dass** der Aktivierungs-Zeitstempel (8) durch das private Lizensierungs-Netzwerk signiert wird.

9. Verfahren nach einem der Ansprüche 3 bis 8, **dadurch gekennzeichnet, dass** das non-fungible Token (2) Informationen zur maximalen Nutzungsdauer der Lizenz enthält, wobei, insbesondere, der Smart Contract das non-fungible Token (2) veranlasst, den letzten verfügbaren Zeitstempel-Block (7) der Blockchain-Struktur (6) abzufragen und davon ausgehend die verbleibende Nutzungsdauer des non-fungible Tokens (2) bzw. der von diesem repräsentierten Lizenz zu berechnen.

10. Verfahren nach einem der vorherigen Ansprüche, **dadurch gekennzeichnet, dass** die privaten Transaktionen durch einen Zeiterfassungs- Smart Contract (9) ausgelöst werden, wobei, insbesondere, der Zeiterfassungs- Smart Contract (9) in regelmäßigen Abständen den Aufruf eines anwenderseitigen Network Time Protocol (NTP)-Servers (13) veranlasst, wobei, bevorzugt, der Zeiterfassungs- Smart Contract (9) bei Kontakt mit dem anwenderseitigen NTP-Server eine neue private Transaktion auslöst, zu welcher Daten in der Blockchain-Struktur (6) hinterlegt werden, welche einen Zeitstempel-Block (7) mit Informationen zur aktuellen Zeit basierend auf dem anwenderseitigen NTP-Server (13) umfassen.

11. Verfahren nach Anspruch 10, **dadurch gekennzeichnet, dass** der Zeiterfassungs- Smart Contract (9) in regelmäßigen Abständen den Aufruf eines externen NTP-Servers (14), insbesondere eines NTP-Servers des privaten Lizensierungs-Netzwerks, veranlasst.

12. Verfahren nach Anspruch 11, **dadurch gekennzeichnet, dass** der Zeiterfassungs- Smart Contract (9) bei Kontakt mit dem externen NTP-Server eine neue private Transaktion auslöst, deren Transaktionsdaten in der Blockchain-Struktur (6) hinterlegt werden und einen Zeitstempel-Block (7) mit Informationen zur aktuellen Zeit basierend auf dem externen NTP-Server (14) umfassen.

13. Verfahren nach einem der Ansprüche 10 bis 12, **dadurch gekennzeichnet, dass** der Zeiterfassungs- Smart Contract (9) in regelmäßigen Abständen private Transaktionen auslöst, deren Daten in der Blockchain- Struktur (6) hinterlegt werden, welche einen Zeitstempel-Block (7) mit Informationen zur aktuellen Zeit basierend auf der internen Uhr des Geräts (1) umfassen.

14. Computerprogramm-Produkt, welches ausgebildet ist, das Verfahren nach einem der vorherigen Ansprüche durchzuführen, wenn es auf einem Rechner oder auf einem Rechnernetzwerk installiert ist.

15. Computerlesbares Medium, auf welchem das Computerprogramm-Produkt nach Anspruch 14 gespeichert ist.
